# EUROPEAN PATENT SPECIFICATION

(11) **EP 2 681 994 B1**
(45) Date of publication and mention of the grant of the patent: **29.10.2014**
(21) Application number: 13175432.7
(22) Date of filing: 05.07.2013
(51) Int. Cl.: A01M 13/00, A01M 17/00

(54) **System and method to control the injection of a gas mixture into an underground burrow occupied by pest rodents**
System und Verfahren zur Steuerung des Einblasens eines Gasgemisches in einen unterirdischen, von Schädlingsnagern bewohnten Bau
Système et procédé pour contrôler l'injection d'un mélange de gaz dans une galerie souterraine occupée par des rongeurs nuisibles

(30) Priority: 06.07.2012 IT TV20120126
(43) Date of publication of application: 08.01.2014
(73) Proprietor: Texa S.p.A., Monastier di Treviso (IT); Biokontest S.r.l., Santo Stino di Livenza (IT)
(72) Inventor: Cavalli, Manuele, 31056 Musestre Di Roncade (IT); Rossi, Carlo, 30029 Santo Stino Di Livenza (IT)
(74) Representative: Boggio, Luigi

(56) References cited:
- DE-U1-202010 014 984
- US-A- 5 588 252

## Description

The present invention is relative to a system and a method to control the injection of a gas mixture into an underground burrow occupied by pest rodents.

In particular, the present invention is relative to a system configured to inject a gas mixture into the burrow occupied by rodents, such as, in particular, rats corresponding, for example, to brown rats or nutrias (Myocastor Copypus), guaranteeing at the same time that in the burrow there is a predetermined concentration of a gas component present in the gas mixture; the description below will explicitly refer to this system without for this reason losing generality.

As many people know, nutrias are large-size rodents similar to beavers and rats that live in underground burrows that are typically built along the banks of watercourses, such as for example drains, streams, rivers, lakes etc..

Thanks to the complete absence of predators and to their high reproductive ability, in recent years nutrias have preponderantly spread in large European territorial areas, thus creating highly numerous colonizer populations. In 2010, scientific studies were conducted on the diffusion of nutrias and came to the conclusion that the number of nutrias occupying the European territory has exceeded the warning threshold of 250 millions.

The overcrowding of nutrias caused by the exponential growth mentioned above recently caused them to be considered by the public opinion as animals that infest the environment, just like rats. As a matter of fact, nutrias are carriers of infective viruses both for human beings and for breeding animals and, therefore, cause significant health and hygiene problems. Furthermore, nutrias normally build their underground burrows in correspondence to the banks of watercourses, thus causing their weakening and provoking significant hydrogeological damages, especially in case of floods.

The health and hygiene problems as well as the environmental damages caused by nutrias were the subject of researches and studies carried on by the non-governmental organisation IUCN (International Union for the Conservation of Nature), which, based on the results of these researches, deemed it necessary for nutrias to be inserted in the list of the hounded most dangerous alien species in the world, namely animals that were introduced by human beings in a new habitat.

In the light of the numerous problems described above, in recent years a need strongly arose to control the number of nutrias so as to keep it below a predetermined numerical threshold, in order to guarantee, on the one hand, an environmental balance and, on the other hand, the reduction of the health and hygiene risks for human beings, pets and breeding animals.

To this aim, different techniques for the reduction of the number of nutrias have been developed, the most of effective of which proved to be the technique that envisages injecting gas into their burrows.

In order to minimize the suffering of nutrias during the gas injection into the burrow, the European Union issued the regulation EC no. 1099/2009, which requires the presence of a predetermined concentration of carbon monoxide CO in the gas mixture injected into the burrow, namely a concentration raging from 2 to 4%.

Hence, the need arose to provide a system that is able to precisely guarantee the presence of a carbon monoxide CO percentage in accordance with the provisions of the European regulation.

Though, this need has not been fulfilled yet due to different technical problems that have not been solved yet.

In particular, the concentration of carbon monoxide injected into the burrow is highly variable/unstable, since, on the one hand, the burrow of the nutria has at least one opening that leads to the outside and allows the gas mixture to flow towards the outside, thus causing a consequent quick and uncontrolled reduction of the concentration of carbon monoxide in the burrow, and, on the other hand, the gas mixture injected is partly absorbed by the soil with absorption degrees that vary as a function of the type/composition/structure of the soil itself and of its humidity level.

The American patent application no. US2007/0277428A describes a method to control rodents, which comprises the steps of using an internal combustion engine to produce an exhaust gas; cooling the exhaust gas; compressing the exhaust gas so as to pressurize it inside a tank; and injecting the pressurized exhaust gas into the burrow through an injector.

The solution described in US2007/0277428A has the big drawback that it does not involve any control of the concentration of the carbon monoxide present inside the burrow.

The patent application no. DE 20 2010 014984 U1 describes a system to control the injection of gas into a burrow, the system comprising: a tubular container pointed at one end, which is structured so as to be at least partially fitted with the point inside the burrow and is configured to adjust the injection of carbon dioxide into the burrow by means of a flow control organ; a sensor, which is arranged at a given distance from the container so as to detect the concentration of carbon dioxide in the atmosphere; a control unit, which controls the flow control organ based on the carbon dioxide concentration detected by the sensor.

The solution described in DE 20 2010 014984 U1 has the big drawback that it is particularly imprecise in determining the concentration of the carbon dioxide injected into the burrow, since it is not able to collect a sample of the carbon dioxide present inside the burrow itself.

The Applicant conducted a detailed study aimed at finding a solution that could specifically help reach the aim of guaranteeing the presence and the preservation, inside the burrow, of the concentration of at least one component of the gas mixture, in particular carbon monoxide, within a predetermined concentration range.

The object of the present invention is to provide a solution that allows the aim described above to be reached.

The present invention, in particular, provides a system to control the injection of a gas mixture into an underground burrow according to the appended claims.

Preferably, the present invention also provides a method to control the injection of a gas mixture into an underground burrow according to the appended claims.

The present invention will now be described with reference to the accompanying drawings, which show a nonlimiting embodiment, wherein:
- Figure 1 schematically shows a system to control the injection of a gas mixture into an underground burrow, which is manufactured according to the present invention;
- Figure 2 schematically shows an injector of the control system shown in figure 1 in a first operating condition;
- Figure 3 schematically shows an injector of the control system shown in figure 1 in a second operating condition;
- Figure 4 schematically shows an injector of the control system shown in figure 1 in a third operating condition;
- Figure 5 schematically shows an injector of the control system shown in figure 1 in a fourth operating condition;
- Figure 6 schematically shows an injector of the control system shown in figure 1 in a fifth operating condition; and
- Figure 7 schematically shows a portion of a burrow occupied by a pest rodent after the injection of the gas and of the foam performed by means of the control system according to the present invention.

The present invention will now be described in detail with reference to the accompanying drawings, so as to allow a person skilled in the art to carry it out and to use it. Possible changes to the embodiments described will be immediately evident to skilled people and the generic principles described can be applied to other embodiments and applications without for this reason going beyond the scope of protection of the present invention as it is defined in the appended claims. Therefore, the present invention cannot be considered as limited to the embodiments described and shown, but is has to be associated with the widest scope of protection possible in accordance with the principles and the features described and claimed herein.

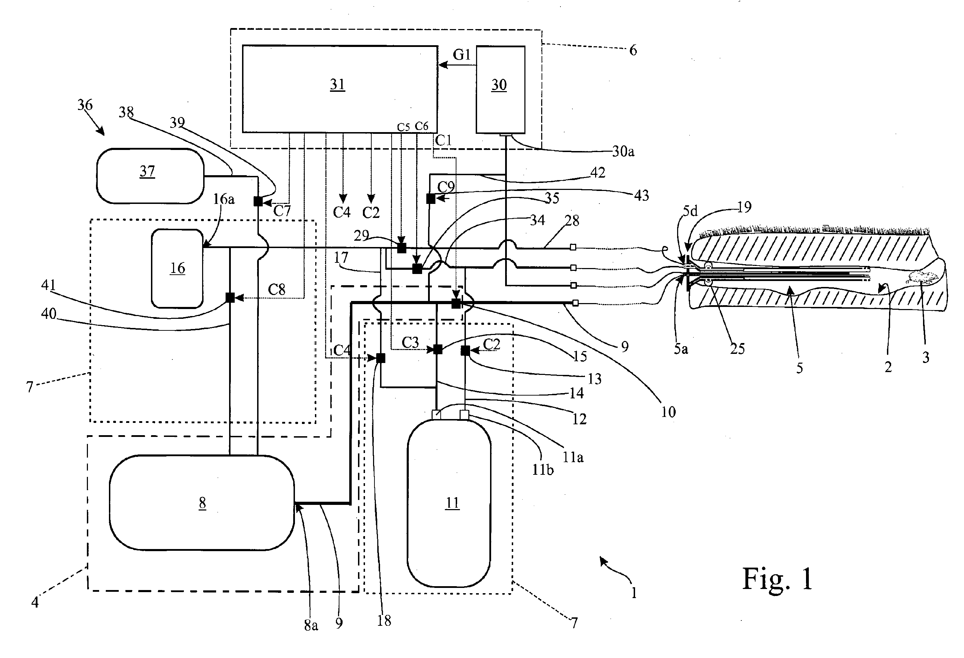

According to a preferred embodiment shown in Figure 1, the control system 1 comprises at least one gas supply system 4, which is configured so as to supply, in correspondence to an outlet, a gas mixture, and at least one injector 5, which is structured so as to be at least partially fitted inside the burrow 2, and is configured to receive, through a first inlet terminal 5a, the gas mixture supplied by the gas supply system 4 as an output, so as to inject the gas mixture received into the burrow 2.

The control system 1 comprises, furthermore, an electronic control system 6, which is configured so as to determine the concentration of at least one component of the gas mixture injected into the burrow 2 and controls the gas supply system 4 so as to vary the quantity of gas mixture supplied to the first inlet terminal 5a of the injector 5 based on the concentration of the component that has been determined.

The control system 1 comprises, furthermore, a foam generator system 7, which is configured to blow/mix the gas or air mixture into/with a foaming agent so as to produce a foam, whereas the injector 5 is structured so as to receive the foam produced and to inject it into the burrow 2.

According to a preferred embodiment shown in Figure 1, the gas supply system 4 comprises a container or tank 8, which is suited to hold a gas mixture preferably containing a predetermined concentration of at least two components, such as for example air and carbon monoxide CO, and is provided with the outlet 8a supplying the gas mixture at a given pressure.

The gas supply system 4 comprises, furthermore, a duct 9 connecting the outlet 8a to the first inlet terminal 5a of the injector 5, and at least one flow regulating organ 10, for example a solenoid valve or any similar device, which is arranged along the duct 9 and is configured to regulate the quantity of gas mixture supplied to the inlet terminal 5a of the injector 5 based on a control signal C1.

According to a preferred embodiment shown in Figure 1, the foam generator system 7 comprises at least one container or tank 11, which holds a foaming agent corresponding, for example, to a predetermined surfactant compound and has an inlet 11a, which is suited to receive air or, alternatively, the pressurized gas mixture in order to mix them with the foaming agent contained in the tank 11, so as to produce a liquid foam-like compound, hereinafter referred to as "foam", as well as an outlet 11b delivering the foam produced.

The foam generator system 7 comprises, furthermore, a duct 12 connecting the outlet 11b of the tank 11 to a second inlet terminal 5b of the injector 5 and, preferably, at least one flow regulating organ 13, which is arranged along the duct 12 and is configured to regulate the quantity of foam supplied to the second inlet terminal 5b of the injector 5 based on a control signal C2.

The foam generator system 7 comprises, furthermore, a duct 14 connecting the duct 9 and the inlet 11a of the tank 11, and a flow regulating organ 15, which is arranged along the duct 14 and is configured to regulate the quantity of gas mixture supplied to the inlet 11a of the tank 11 based on a control signal C3.

According to a preferred embodiment shown in Figure 1, the foam generator system 7 preferably comprises, furthermore, a pressurized air generator device 16 comprising, for example, a pressurized air tank and/or compressor, which is configured to deliver, in correspondence to an outlet 16a, air under a given pressure, a duct 17 connecting the outlet 16a to the inlet 11a of the tank 11, and a flow regulating organ 18, which is arranged along the duct 17 and is configured to regulate the quantity of air supplied to the inlet 11a of the tank 11 based on a control signal C4.

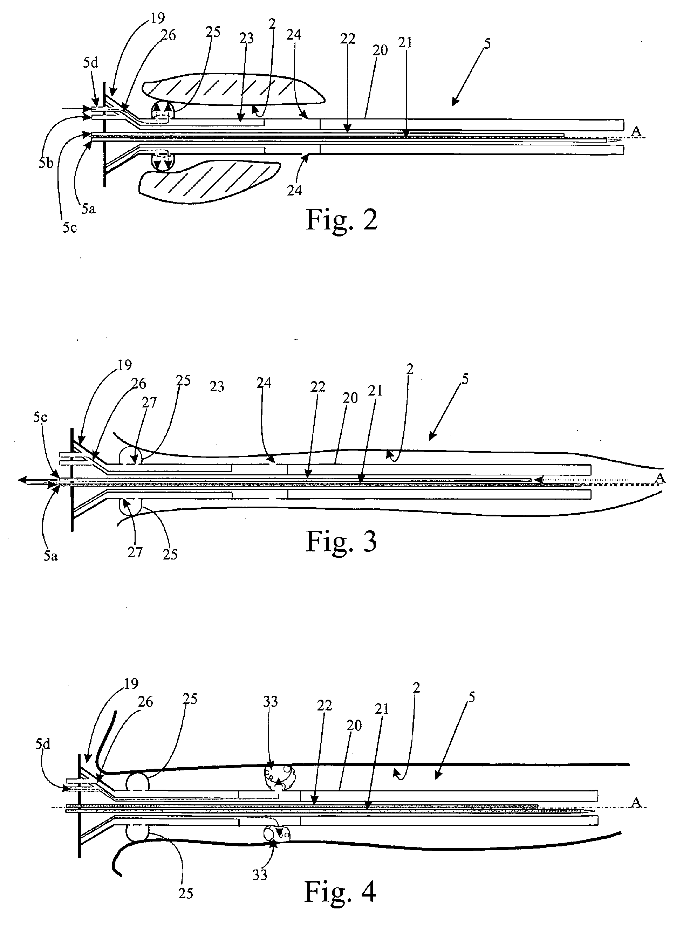

According to a preferred embodiment shown in Figures 2-6, the injector 5 is shaped so as to have an oblong shape and extends along a longitudinal axis A so as to be fitted inside the burrow 2.

Preferably, the injector 5 is provided with a head 19, which is suited to remain on the outside of the burrow 2 and is preferably but not necessarily provided with a handle (not shown), and an outer tubular casing 20 made of a stiff material, for example plastic or metal, which has an oblong shape an extends, starting from the head 19, along the longitudinal axis A, so as to fitted into the burrow 2.

Preferably, the injector 5 is structured so as to have the first inlet terminal 5a arranged on the head 19 and comprises a first gas mixture injection channel or duct 21 having a first end connected to the first inlet terminal 5a and a second end that is shaped so as to direct the gas mixture along a direction that is parallel to the longitudinal axis A.

Preferably, in the embodiment shown, the first duct 21 is defined by a first tubular stem, which extends inside the outer tubular casing 20 along a direction that is substantially parallel to the longitudinal axis A, and has a terminal portion, which is opposite to the first inlet terminal 5a and is shaped as a nozzle so as to emit, in use, the gas mixture into the burrow 2, in a direction that is substantially parallel to the longitudinal axis A.

According to a preferred embodiment shown in figure 2, the injector 5 is structured, furthermore, so as to have an outlet terminal 5c arranged on the head 19 and a second gas mixture outflow channel or duct 22, which extends parallel to the longitudinal axis A and has an end, which is arranged so as to face the inner part of the burrow 2 in order to the be able to collect/receive at least one sample of the gas mixture injected into the burrow 2, and the opposite end, which is connected to the outlet terminal 5c so as to supply to the latter the gas mixture sample collected inside the burrow 2.

In the embodiment shown, the second channel or duct 22 is defined by a second tubular stem, which is arranged inside the outer tubular casing 20 and extends, starting from the head 19 of the injector 5, along a direction that is substantially parallel to the longitudinal axis A, thus remaining next to the first stem, so that the terminal portion that is opposite to the head 20 does not extend beyond the axial end of the outer tubular casing 20.

According to a preferred embodiment shown in Figure 2, the injector 5 is structured, furthermore, so as to have the second inlet terminal 5b arranged on the head 19 and a tubular duct 23, which extends inside the tubular casing 20 parallel to the longitudinal axis A and has an end, which is connected to the second inlet terminal 5b so as to be able to receive the foam under pressure, and an opposite end portion, which communicates with the space on the outside of the injector 5 through one or more radial openings 24 obtained on the tubular casing 20. Each radial opening 24 is shaped in such a way that, in use, the foam under pressure conveyed in the tubular duct 23 is expelled by the injector 5 in a radial manner, namely in a direction that is substantially orthogonal to the longitudinal axis A.

According to a possible embodiment, the injector 5 is structured, furthermore, so as to have a tubular duct (not shown), which extends inside the tubular casing 20 parallel to the longitudinal axis A and has an end, which is coupled to the second inlet terminal 5b so as to be able to receive the foam under pressure, and an opposite end portion, which communicates with the space on the outside of the injector 5 through an axial opening, so that, in use, the foam under pressure conveyed in the tubular duct (not shown) is expelled by the injector 5 in an axial manner, namely in a direction that is substantially parallel to the longitudinal axis A.

According to a preferred embodiment shown in Figure 2, the injector 5 preferably comprises, furthermore, at least one inflatable/expandable tubular collar 25, which has an annular shape and is steadily fitted in the outer tubular casing 20 so as to be arranged substantially coaxial to the longitudinal axis A. The collar 25 is suited to be inflated so as to expand between a rest condition (shown with a broken line in Figure 2), in which it is completely deflated and allows the injector 5 to be inserted/removed into/from the burrow 2, and an operating configuration, in which it takes up a volume that allows it to strike with its outer surface against the inner surface of the burrow 2, so as to hermetically seal the burrow 2.

The injector 5 comprises, furthermore, a third inlet terminal 5d, which is arranged on the head 19, and an air injection channel 26, which extends, starting from the head 19, inside the tubular casing 20 remaining substantially parallel to the longitudinal axis A and has a first end, which is connected to the third inlet terminal 5d so as to receive air under pressure, and an intermediate portion, which communicates with the collar 25 through at least one radial opening 27, which is obtained on the tubular casing 20.

With reference to figure 1, the third inlet terminal 5d is connected to the outlet 16a of the pressurized air generator device 16 through a duct 28, along which there is arranged an air flow regulating organ 29, which is configured to regulate the quantity of air under pressure supplied to the third inlet terminal 5d of the injector 5 based on a control signal C5. In use, the injection of air into the third inlet terminal 5d causes the expansion of the tubular collar 25 from the rest condition to the operating condition, in which it strikes, with its outer surface, against the inner wall of the burrow 2, causing the latter to be sealed with respect to the outside.

According to a preferred embodiment shown in Figure 1, the electronic control system 6 comprises a gas analyser device 30, which is configured to determine the concentration of at least one component of the gas mixture injected into the burrow 2, and an electronic control unit 31, which is configured to control the gas supply system 4 based on the concentration of the gas component determined by the gas analyser device 30.

In the embodiment shown, the gas analyser device 30 comprises an inlet duct 30a, which is suited to be coupled to the outlet terminal 5c of the injector 5 through a connection duct, so as to receive a sample of the gas mixture collected inside the burrow 2, and at least one output, which generates a signal G1 indicating the concentration of the gas component that has been determined.

According to a preferred embodiment, the gas analyser device 30 works with a NDIR (Non Dispersive InfraRed) technology and, for it is known, it will not be described in detail, except for the clarification concerning the fact that it comprises a gas analysis chamber (not shown); a gas suction device (not shown), which is connected to the inlet duct 30a to suck the gas mixture and deliver it to the gas analysis chamber; an infrared emitting source (not shown), which is suited to emit, inside the chamber, a beam of radiations in the infrared frequency band; an infrared multi-detector device (not shown), which is configured to generate an electrical signal having an electrical quantity indicating the absorption of the radiations by the gas mixture, in given frequency bands; and an electronic analysis/processing circuit, which is configured to measure/determine the concentration of at least one component of the gas mixture inside the analysis chamber based on the electrical quantity generated by the multi-detector device, so as to generate the electrical signal G1 indicating the concentration that has been determined.

As far as the electronic control unit 31 is concerned, on the other hand, it is configured to receive the signal G1 and to generate the control signals C1, C2, C3, C4 and C5 so as to control the corresponding flow regulating organs 10, 13, 15, 18, 29.

According to a preferred embodiment shown in figure 1, the electronic control unit 31 is configured to control the flow regulating organ 10 of the gas supply system 4 so as to vary the quantity of gas mixture injected into the burrow 2 based on the concentration of the component of the gas mixture indicated in the signal G1. In particular, the electronic control unit 31 is configured to control the flow regulating organ 10 so as to increase/decrease the quantity, or the flow rate, of the gas mixture injected into the burrow 2 based on the concentration determined, so that the actual concentration of the gas component inside the burrow 2 is within a predetermined concentration range. Preferably, in case the gas mixture component being controlled corresponds to carbon monoxide CO, the concentration range of carbon monoxide ranges from 2 to 4% of the gas mixture injected into the burrow 2.

Preferably, the electronic control unit 31 is configured, furthermore, to control the flow regulating organs 10, 13, 15 and 18 through the respective signals C1, C2, C3 e C4, so as to cause an alternate injection of gas and foam into the burrow 2 according to the operating modes described in detail below.

The electronic control uni 31, furthermore, is preferably configured to control the flow regulating organs 15 and 18 so as to blow the gas or air mixture into the foam tank 11, so that the latter supplies to the second inlet 5b of the injector 5 a foam containing air bubbles or, alternatively, a foam containing gas mixture bubbles.

Now we will describe the operating method of the system 1 to control the injection of gas into the burrow 2, wherein, in order to keep the description as simple as possible, we assume that the gas mixture comprises two components, namely air and carbon monoxide, that the burrow 2 has one single opening and that all the flow regulating organs are in an initial condition of complete closing of the respective ducts.

With reference to Figures 1 and 2, in the initial step, the injector 5 is placed inside the burrow 2 so that its head 19 preferably remains on the outside of the burrow 2 itself and its tubular casing 20 is inserted into the burrow 2.

With reference to Figure 2, the electronic control unit 31 preferably controls the flow regulating organ 29 so as to supply air under pressure to the third inlet terminal 5d of the injector 5 in order to cause the expansion of the tubular collar 25 to the operating condition in which is strikes against the inner wall of the burrow 2, thus determining, on the one hand, the mechanical coupling of the injector 5 to the wall and, on the other hand, an almost hermetical sealing of the burrow 2 with respect to the outside, so as to advantageously prevent the gas mixture under pressure injected into the burrow 2 from dangerously dispersing in the environment on the outside of the burrow 2.

With reference to figure 3, the electronic control unit 31 preferably controls the flow regulating organ 10 so as to inject the gas mixture under pressure into the burrow 2. Simultaneously to the injection of the gas mixture, the gas analyser device 30 receives, in its inlet duct 30a, a gas mixture sample collected from the burrow 2 through the second duct 22 of the injector 5, measures the concentration of carbon oxide in the sample, and generates the electrical signal G1 indicating the concentration measured.

The electronic control unit 31 receives the electrical signal G1 and checks, instant by instant, whether the concentration of carbon monoxide lies within the predetermined concentration range. Preferably, the electronic control unit 31 checks whether the carbon monoxide of the mixture sample collected has a concentration that is equal to the maximum value of the predetermined concentration range, in particular 4%.

In case of a negative result, namely if the concentration of carbon monoxide does not lie within the range (or, according to a possible embodiment, it is lower than the maximum value of the range), the electronic control unit 31 keeps controlling the injection of the gas mixture into the burrow 2, so as to cause an increase in the concentration of carbon monoxide inside the latter. It should be pointed out that, during the injection of gas into the burrow, the air present in the burrow can flow out of the burrow through an outflow duct (not shown), which is properly coupled to the outlet terminal 5c and/or to the connection duct.

In case of a positive result, namely if the concentration of carbon monoxide measured in the burrow 2 lies within the predetermined range (or, according to a possible embodiment, it has reached the maximum value), the electronic control unit 31 interrupts the injection of gas mixture into the burrow 2 and controls the foam generator system 7 so as to inject into the burrow 2 a predetermined quantity of foam containing the gas mixture.

With reference to figures 1 and 4, the electronic control unit 31 controls the closing of the flow regulating organ 10 and opens the duct 14 through the flow regulating organ 15, so as to blow the gas mixture into the tank 11 and obtain a foam comprising gas mixture bubbles. The electronic control unit 31, furthermore, controls the opening of the duct 12 through the flow regulating organ 13, so as to cause the supply of the foam to the burrow 2. In particular, during this step, the injector 5 generates, as an output, foam agglomerates 33 in the burrow 2 (Figure 4).

It should be pointed out that the foam can be injected into the burrow either radially through the radial openings 24 or axially in the case of the embodiment that involves the use of a duct provided with an axial opening.

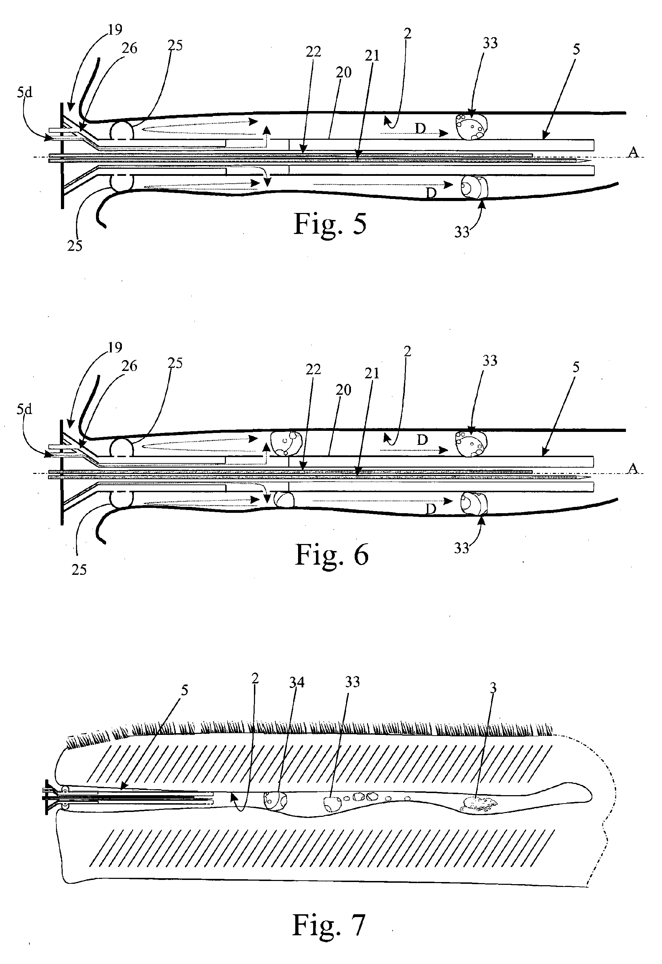

Preferably, in order to push the foam agglomerates 33 deep into the burrow 2, the control system 1 can interrupt the injection of foam and inject air under pressure into the second inlet 5b of the injector 5. Thanks to the hermetical sealing of the tubular collar 25 inside the burrow 2, the air under pressure expelled by the injector 5 is forced in a direction that is opposite to the collar 25 itself, so as to axially move the foam agglomerates 33 in the direction D towards the depth of the burrow 2 (Figure 5).

To this aim, the foam generator system 7 can be provided with a by-pass duct 34, which connects the duct 12 to the pressurized air duct 28, and a flow regulating organ 35, which is arranged along the by-pass duct 34 and is configured to regulate the quantity/pressure/flow rate of the air fed along the by-pass duct 34 based on a control signal C6 generated by the electronic control unit 31.

It should be pointed out that each foam agglomerate 33 containing the gas mixture temporarily acts as a sealing plug for the burrow 2, so as to keep the concentration of carbon monoxide inside the burrow 2 stable.

The foam agglomerates 33 containing the gas mixture also fulfil the function of compensating the absorption of gas mixture by the soil surrounding the burrow 2. As a matter of fact, the bubbles containing the gas mixture progressively burst in time, thus releasing a quantity of gas mixture able to replace the gas quantity absorbed by the soil, hence advantageously prolonging the preservation, inside the burrow 2, of the carbon monoxide concentration within the predetermined concentration range.

The foam agglomerates 33 containing the gas mixture, furthermore, are particularly advantageous in case of burrows having holes or lateral branches extending deep down in the ground. As a matter of fact, the foam, thanks to its weight, is able to be deposit and to effectively fill the deep areas of the burrow, dragging with it the gas mixture which, otherwise, for it is particularly light, would tend to move upwards, thus leaving the deepest areas free.

Preferably, the electronic control unit 31, furthermore, can control the injection of foam agglomerates 34 containing air, so as to delimit the space inside the burrow 2 containing the gas mixture and, if necessary, allow the injector 5 to be removed from the burrow 2, thus preventing gas from flowing out of the burrow 2 for a certain time interval. In particular, each foam agglomerate 34 containing air acts as a temporary safety plug for the burrow 2, which can replace the hermetical plug created by means of the tubular collar 25.

To this aim, the electronic control unit 31 can be configured to close the duct 14 through the organ 15, so as to interrupt the supply of gas to the tank 11, and to open the duct 17 through the organ 18, so as to inject air into the tank 11 and generate foam with air bubbles. Obviously, also in this case, the electronic control unit 31 is able to cause the axial push of the foam agglomerates 34 containing air bubbles in the direction D towards the depth of the burrow 2, so as to crate as many plugs. The axial push of the agglomerates is performed by controlling the opening of the by-pass duct 34 through the organ 35.

With reference to Figure 1, the control system 1 comprises, furthermore, a gas supply system 36 to supply gas to the gas tank 11. According to a preferred embodiment shown in Figure 1, the gas supply system 36 comprises a gas tank 37, which contains a predetermined gas, for example carbon monoxide; a duct 38, which connects the tank 37 to an inlet of the gas tank 8; a flow regulating organ 39, which is arranged along the duct 38 so as to regulate the gas quantity supplied to the gas tank 8 based on a signal C7 generated by the electronic control unit 31; a duct 40, which connects the pressurized air generator device 16 to an inlet of the gas tank 8; a flow regulating organ 41, which is arranged along the duct 40 so as to regulate the quantity/flow rate of the air supplied to the tank 8 based on a signal C8 generated by the electronic control unit 31.

The gas supply system 36 comprises, furthermore, a duct 42, which connects the duct 9 to the inlet duct 30a, and a flow regulating organ 43, which is arranged along the duct 42 so as to regulate the gas quantity supplied to the gas analyser device 30 based on a signal C9 generated by the electronic control unit 31

In use, the electronic control unit 31 is able to reload the gas mixture inside the gas tank 8 with a given concentration of carbon monoxide by properly controlling the quantity/flow rate of the carbon monoxide and the quantity/flow rate of the air supplied to the tank 8 through the organs 39 and 41 based on the concentration of carbon monoxide received from the gas analyser device 30 through the ducts 9 and 42.

The advantages of the system described above are evident.

Thanks to the control of the injection of the gas mixture into the burrow, based on the concentration of the mixture collected from the burrow itself, the system is able to guarantee, with a high precision, the presence and the preservation of a concentration of the carbon monoxide injected into the burrow within the 2-4% range provided for by the European regulation.

The presence of the agglomerates/plugs of gas mixture foam injected into the burrow allows a prolongation of the preservation of the carbon monoxide concentration inside the burrow within the predetermined range mentioned above.

The presence of the agglomerates/plugs of air foam injected into the burrow temporarily prevents the gas mixture from flowing out of the burrow in the absence of the injector.

The presence of the tubular collar allows the creation of a sealing plug in the burrow, which prevents the gas mixture from flowing out of the burrow and limits the space of the burrow to be taken up by the gas, thus reducing the quantity of gas mixture necessary to perform the operation.

Finally, it is clear that the system and the method described above can be subject to changes and variations, without for this reason going beyond the scope of protection of the present invention defined in the appended claims.

## Claims

1. A system (1) configured so as to control the injection of gas into an underground burrow (2) occupied by pest rodents (3), said system comprising:
- at least one gas supply system (4), which is configured so as to supply a gas mixture;
- at least one injector (5), which is structured so as to be at least partially fitted inside the burrow (2), and is suited to:
receive the gas mixture supplied by said gas supply system (4) so as to inject the gas mixture received into the burrow (2) itself, and being **characterized in that** said at least one injector(s)
collects at least one sample of the gas mixture injected from the burrow (2);
said injection control system (2) comprises, furthermore,
electronic control means (6), which are configured so as to:
- determine the concentration of at least one component of the gas mixture injected into the burrow (2) based on said sample collected;
- control said gas supply system (4) so as to vary the quantity of gas mixture supplied to said injector (5) based on the concentration of said component that has been determined.

2. A control system according to claim 1, wherein said electronic control means (6) comprise a gas analyser device (30), which is configured to measure said concentration of the component of the gas mixture received through an inlet duct (30a) and to generate a signal (G1) indicating the concentration measured;
said injector (5) being structured so as to have a first gas outflow channel (22), which communicates, at a first end, with said burrow (2) and, at a second opposite end, with said inlet duct (30a), and is structured so as to cause the outflow of a gas mixture sample collected from the burrow (2) towards the inlet duct (30a) of said gas analyser device (30).

3. A control system according to claims 1 or 2 and comprising, furthermore, a foam generator system (7), which is configured to blow at least one gas mixture into a foaming agent so as to produce a foam; and wherein said injector (5) is structured so as to receive said foam from said foam generator system (7) and to inject it into the burrow (2).

4. A control system according to claim 3, wherein said electronic means (6) are configured to control said gas supply system (4) and said foam generator system (7) so as to inject the foam and the gas into the burrow (2), through said injector (5), in an alternate manner.

5. A control system according to any of the claims from 2 to 4, wherein said gas supply system (4) comprises at least one gas mixture containing tank (8) provided with an outlet (8a) supplying said gas mixture, at least one first duct (9) connecting said outlet (8a) to a first inlet (5a) of said injector (5) so as to supply the gas mixture, and means (10) to regulate the gas quantity, which are arranged along said at least one first duct (9) so as to regulate the quantity of gas mixture supplied to said injector (5); said electronic control means (6) comprising an electronic control unit (31), which is suited to receive said signal (G1) indicating the concentration of the component that has been measured, and is configured to control said flow regulating means (10) so as to regulate the quantity of the gas mixture injected based on said concentration measured, in order to ensure that the concentration of the gas present in the burrow (2) is within a predetermined concentration range.

6. A control system according to claim 5, wherein said injector (5) extends along a longitudinal axis (A) and is provided with a gas injection duct (21), which extends parallel to the longitudinal axis (A) and has a terminal part configured so as to emit a jet of gas mixture in a direction that is parallel to said longitudinal axis (A).

7. A control system as claimed in claim 5 or 6, wherein said injector (5) extends along a longitudinal axis and is provided with a foam injection duct (22), which extends parallel to the longitudinal axis (A) and is provided with at least one radial opening (24) or an axial opening, which is suited to direct the foam in a direction that is transverse or, respectively, parallel to said longitudinal axis (A).

8. A control system according to any of the claims from 5 to 7, wherein said injector (5) comprises at least one inflatable tubular collar (25), which is arranged coaxial to the longitudinal axis (A), and is suited to be inflated so as to expand, thus striking against the inner lateral surface of the burrow (2) and hermetically sealing the burrow (2) itself; and an air injection channel (26), which is structured so as to have an end suited to receive air under pressure, and communicates with said collar (25) so that the pressurized air received can be injected into the tubular collar (25), thus causing the expansion thereof.

9. A control system according to claim 8 and comprising, furthermore, pressurized air generator means (16), which are suited to supply pressurized air to the air injection channel (26) of said injector (5), and wherein said electronic control unit (31) is configured to control said air generator means (16) so as to control the expansion of said tubular collar (25) in said burrow (2).

10. A method to control the injection of a gas mixture into an underground burrow (2) occupied by pest rodents (3), said method comprising the step of:
- supplying a predetermined gas mixture to a burrow (2) through an injector (5) fitted in the burrow (2);
the method being **characterised in that** it comprises the steps of:
- collecting from the burrow (2), through said injector, at least one sample of the gas mixture injected;
- determining the concentration of at least one component of the gas mixture injected into the burrow (2) based on the sample collected;
- varying the quantity of the gas mixture injected into the burrow (2), through said injector (5), based on the concentration of the component that has been determined.

11. A method according to claim 10, wherein said injector (5) is structured so as to have a first gas outflow channel (22), which has a first opening communicating with said burrow (2) so as to collect a sample of the gas mixture injected, and a second outflow opening for the outflow of the gas sample collected;
said method comprising the steps of:
causing the outflow of said gas mixture sample collected from the burrow (2) through said injector (5), so as to supply it to an inlet duct (30a) of a gas analyser device (30), which is connected to said second opening of said injector;
measuring, through said gas analyser device (30), said concentration of the component of the gas mixture, so as to generate a signal (G1) indicating the concentration measured.

12. A method according to any of the claims from 10 to 11 and comprising the steps of:
blowing at least one gas mixture into a foaming agent, so as to produce foam;
supplying said foam to said injector (5), so as to inject it into the burrow (2).

13. A method according to claim 12 and comprising the step of injecting the foam and the gas into the burrow (2) in an alternate manner, through said injector (5).

14. A method according to any of the claims from 11 to 13 and comprising the steps of:
providing a gas supply system (4), which comprises at least one gas mixture containing tank (8) provided with an outlet (8a) supplying said gas mixture, at least one first duct (9) connecting said outlet (8a) to a first inlet (5a) of said injector (5) so as to supply the gas mixture, and
means (10) to regulate the gas quantity, which are arranged along said at least one first duct (9) so as to regulate the quantity of gas mixture supplied to said injector (5);
controlling said flow regulating means (10) so as to regulate the quantity of the gas mixture injected based on said concentration measured, in order to ensure that the concentration of the gas present in the burrow (2) is within a predetermined concentration range.

15. A method according to any of the claims from 10 to 14 and comprising the step of emitting, through said injector (5), a jet of gas mixture in a direction that is parallel to said longitudinal axis (A) of said injector and/or of directing the foam in a direction that is transverse or, respectively, parallel to said longitudinal axis (A).

## Patentansprüche

1. System, das aufgebaut ist, um das Einblasen von Gas in einen von Schädlingsnagern (3) bewohnten unterirdischen Bau (2) zu steuern, wobei das System umfasst:
- wenigstens ein Gaszuführungssystem (4), das aufgebaut ist, um eine Gasmischung zuzuführen;
- wenigstens eine Einblasdüse (5), die derart aufgebaut ist, dass sie wenigstens teilweise in das Innere des Baus (2) passt und geeignet ist, um:
die von dem Gaszuführungssystem (4) gelieferte Gasmischung zu empfangen, um die erhaltene Gasmischung in den Bau (2) selbst einzublasen, und **dadurch gekennzeichnet, dass** die wenigstens eine Einblasdüse (5)
wenigstens eine Probe der eingeblasenen Gasmischung aus dem Bau (2) sammelt;
wobei das Einspritzsteuersystem (2) außerdem umfasst:
elektronische Steuermittel (6), die aufgebaut sind, um:
- die Konzentration wenigstens einer Komponente der in den Bau (2) eingeblasenen Gasmischung basierend auf der gesammelten Probe zu bestimmen;
- das Gaszuführungssystem (4) zu steuern, um die Menge der an die Einblasdüse (5) zugeführten Gasmenge basierend auf der Konzentration der Komponente, die bestimmt wurde, zu variieren.

2. Steuersystem nach Anspruch 1, wobei die elektronischen Steuermittel (6) eine Gasanalysevorrichtung (30) umfassen, die aufgebaut ist, um die Konzentration der Komponente der Gasmischung, die durch einen Einlasskanal (30a) aufgenommen wird, zu messen und ein Signal (G1) zu erzeugen, das die gemessene Konzentration anzeigt;
wobei die Einblasdüse (5) derart aufgebaut ist, dass sie einen ersten Gasausströmungskanal (22) hat, der an dem ersten Ende mit dem Bau (2) in Verbindung steht und an dem zweiten entgegengesetzten Ende mit dem Einlasskanal (30a) in Verbindung steht, und derart aufgebaut ist, dass sie das Ausströmen einer Gasmischungsprobe, die aus dem Bau (2) in Richtung des Einlasskanals (30a) der Gasanalysevorrichtung (30) strömt, bewirkt.

3. Steuersystem nach Anspruch 1 oder 2, das außerdem umfasst: ein Schaumerzeugungssystem (7), das aufgebaut ist, um wenigstens eine Gasmischung in ein Schäumungsmittel zu blasen, um einen Schaum herzustellen; und wobei die Einblasdüse (5) derart aufgebaut ist, dass sie von dem Schaumerzeugungssystem (7) Schaum empfängt und ihn in den Bau (2) einbläst.

4. Steuersystem nach Anspruch 3, wobei die elektronischen Mittel (6) aufgebaut sind, um das Gaszuführungssystem (4) und das Gaserzeugungssystem (7) zu steuern, um den Schaum und das Gas in einer abwechselnden Weise durch die Einblasdüse (5) in den Bau (2) einzublasen.

5. Steuersystem nach einem der Ansprüche 2 bis 4, wobei das Gaszuführungssystem (4) wenigstens einen gasmischungsenthaltenden Behälter (8) umfasst, der versehen ist mit: einem Auslass (8a), der die Gasmischung liefert, wenigstens einem ersten Kanal (9), der den Auslass (8a) mit einem ersten Einlass (5a) der Einblasdüse (5) verbindet, um die Gasmischung zuzuführen, und Mitteln (10) zum Regulieren der Gasmenge, welche entlang des wenigstens einen ersten Kanals (9) angeordnet sind, um die Menge der Gasmischung, die an die Einblasdüse (5) geliefert wird, zu regulieren; wobei die elektronischen Steuermittel (6) eine elektronische Steuereinheit (31) umfassen, die geeignet ist, um das Signal (G1) zu empfangen, das die Konzentration der Komponente, die gemessen wurde, anzeigt, und aufgebaut ist, um die Strömungsregulierungsmittel (10) zu steuern, um die Menge der eingeblasenen Gasmischung basierend auf der gemessenen Konzentration zu regulieren, um sicherzustellen, dass die Konzentration des in dem Bau (2) vorhandenen Gases innerhalb eines vorgegebenen Konzentrationsbereichs ist.

6. Steuersystem nach Anspruch 5, wobei die Einblasdüse (5) sich entlang einer Längsachse (A) erstreckt und mit einem Gaseinblaskanal (21) versehen ist, der sich parallel zu der Längsachse (A) erstreckt und einen Anschlussteil hat, der aufgebaut ist, um einen Gasmischungsstrahl in einer Richtung abzugeben, die parallel zu der Längsachse (A) ist.

7. Steuersystem nach Anspruch 5 oder 6, wobei die Einblasdüse (5) sich entlang einer Längsachse erstreckt und mit einem Schaumeinblaskanal (22) versehen ist, der sich parallel zu der Längsachse (A) erstreckt und mit wenigstens einer radialen Öffnung (24) oder einer axialen Öffnung versehen ist, die jeweils geeignet ist, den Schaum in eine Richtung zu leiten, die quer oder parallel zu der Längsachse (A) ist.

8. Steuersystem nach einem der Ansprüche 5 bis 7, wobei die Einblasdüse (5) wenigstens eine aufblasbare rohrförmige Manschette (25) umfasst, die koaxial mit der Längsachse (A) angeordnet ist und die geeignet ist, aufgeblasen zu werden, um sich auszudehnen, wodurch sie gegen die innere seitliche Oberfläche des Baus (2) trifft und den Bau (2) selbst hermetisch abdichtet; und einen Lufteinblaskanal (26), der derart aufgebaut ist, dass er ein Ende hat, das geeignet ist, um Luft unter Druck aufzunehmen, und mit der Manschette (25) in Verbindung steht, so dass die aufgenommene Druckluft in die rohrförmige Manschette (25) eingeblasen werden kann, wodurch deren Ausdehnung bewirkt wird.

9. Steuersystem nach Anspruch 8, das außerdem umfasst:
Drucklufterzeugungsmittel (16), die geeignet sind, um Druckluft an den Lufteinblaskanal (26) der Einblasdüse (5) zuzuführen, und wobei die elektronische Steuereinheit (31) aufgebaut ist, um die Lufterzeugungsmittel (16) zu steuern, um die Ausdehnung der rohrförmigen Manschette (25) in dem Bau (2) zu steuern.

10. Verfahren zur Steuerung des Einblasens einer Gasmischung in einen von Schädlingsnagern (3) bewohnten unterirdischen Bau (2), wobei das Verfahren den folgenden Schritt umfasst:
- Zuführen einer vorgegebenen Gasmischung durch eine Einblasdüse (5), die in den Bau (2) eingepasst ist, in einen Bau (2); wobei das Verfahren **dadurch gekennzeichnet ist, dass** es den folgenden Schritt umfasst:
- Sammeln wenigstens einer Probe der eingeblasenen Gasmischung aus dem Bau (2) durch die Einblasdüse;
- Bestimmen der Konzentration wenigstens einer Komponente der in den Bau (2) eingeblasenen Gasmischung basierend auf der gesammelten Probe;
- Variieren Menge der durch die Einblasdüse (5) in den Bau (2) eingeblasenen Gasmischung basierend auf der Konzentration der Komponente, die bestimmt wurde.

11. Verfahren nach Anspruch 10, wobei die Einblasdüse (5) derart aufgebaut ist, dass sie einen ersten Gasausströmungskanal (22), der eine erste Öffnung hat, die mit dem Bau (2) in Verbindung steht, um eine Probe der eingeblasenen Gasmischung zu sammeln, und eine zweite Ausströmungsöffnung für das Ausströmen der gesammelten Gasprobe hat;
wobei das Verfahren die folgenden Schritte umfasst:
Bewirken des Ausströmens der Gasmischungsprobe, die aus dem Bau (2) durch die Einblasdüse (5) gesammelt wird, um sie an einen Einlasskanal (30a) einer Gasanalysevorrichtung (30) zuzuführen, die mit der zweiten Öffnung der Einblasdüse verbunden ist;
Messen der Konzentration der Komponente der Gasmischung durch die Gasanalysevorrichtung (30), um ein Signal (G1) zu erzeugen, das die gemessene Konzentration anzeigt.

12. Verfahren nach einem der Ansprüche von 10 bis 11, das die folgenden Schritte umfasst:
Blasen wenigstens einer Gasmischung in ein Schäumungsmittel, um Schaum herzustellen;
Zuführen des Schaums an die Einblasdüse (5), um ihn in den Bau (2) einzublasen.

13. Verfahren nach Anspruch 12, das den Schritt des Einblasens des Schaums und des Gases durch die Einblasdüse (5) in den Bau (2) in einer abwechselnden Weise umfasst.

14. Verfahren nach einem der Ansprüche 11 bis 13, das die folgenden Schritte umfasst:
Bereitstellen eines Gaszuführungssystems (4), das wenigstens einen gasmischungsenthaltenden Behälter (8) umfasst, der mit einem Auslass (8a) versehen ist, der die Gasmischung liefert, wobei wenigstens ein erster Kanal (9) den Auslass (8a) mit dem ersten Einlass (5a) der Einblasdüse (5) verbindet, um die Gasmischung zuzuführen, und
Mittel (10) zum Regulieren der Gasmenge, die entlang wenigstens eines ersten Kanals (9) angeordnet sind, um die Menge der an die Einblasdüse (5) zugeführten Gasmischung zu regulieren;
Steuern der Strömungsregulierungsmittel (10), um die Menge der eingeblasenen Gasmischung basierend auf der gemessenen Konzentration zu regulieren, um sicherzustellen, dass die Konzentration des in dem Bau (2) vorhandenen Gases innerhalb eines vorgegebenen Konzentrationsbereichs ist.

15. Verfahren nach einem der Ansprüche 10 bis 14, das den Schritt des Abgebens eines Gasmischungsstrahls durch die Einblasdüse (5) in einer Richtung, die parallel zu der Längsachse (A) der Einblasdüse ist, und/oder des Leitens des Schaums in einer Richtung die jeweils quer oder parallel zu der Längsachse (A) ist, umfasst.

## Revendications

1. Système (1) configuré de façon à commander l'injection de gaz dans un terrier souterrain (2) occupé par des rongeurs ravageurs (3), ledit système comprenant :
- au moins un système d'alimentation en gaz (4), qui est configuré de façon à fournir un mélange gazeux ;
- au moins un injecteur (5), qui est structuré de façon à être au moins partiellement inséré à l'intérieur du terrier (2), et qui est approprié pour :
recevoir le mélange gazeux fourni par ledit système d'alimentation en gaz (4) de façon à injecter le mélange gazeux reçu dans le terrier (2) lui-même, et étant **caractérisé en ce que** ledit au moins un injecteur (5) collecte dans le terrier (2) au moins un échantillon du mélange gazeux injecté ;
ledit système de commande d'injection (2) comprenant, en outre, des moyens de commande électroniques (6), qui sont configurés de façon à :
- déterminer la concentration d'au moins un composant du mélange gazeux injecté dans le terrier (2) à partir dudit échantillon collecté ;
- commander ledit système d'alimentation en gaz (4) de façon à faire varier la quantité de mélange gazeux fournie audit injecteur (5) en fonction de la concentration dudit composant qui a été déterminée.

2. Système de commande selon la revendication 1, dans lequel lesdits moyens de commande électroniques (6) comprennent un dispositif analyseur de gaz (30), qui est configuré pour mesurer ladite concentration du composant du mélange gazeux reçu à travers une conduit d'entrée (30a) et pour générer un signal (G1) indiquant la concentration mesurée ;
ledit injecteur (5) étant structuré de façon à avoir un premier canal de sortie de gaz (22), qui communique, à une première extrémité, avec ledit terrier (2), et, à une deuxième extrémité opposée, avec ladite conduite d'entrée (30a), et qui est structuré de façon à provoquer la sortie d'un échantillon de mélange gazeux collecté dans le terrier (2) vers la conduite d'entrée (30a) dudit dispositif analyseur de gaz (30).

3. Système de commande selon les revendications 1 ou 2 et comprenant, en outre, un système générateur de mousse (7), qui est configuré pour souffler au moins un mélange gazeux dans un agent moussant de façon à produire une mousse ; et dans lequel ledit injecteur (5) est structuré de façon à recevoir ladite mousse en provenance dudit système générateur de mousse (7) et à l'injecter dans le terrier (2).

4. Système de commande selon la revendication 3, dans lequel lesdits moyens électroniques (6) sont configurés pour commander ledit système d'alimentation en gaz (4) et ledit système générateur de mousse (7) de façon à injecter la mousse et le gaz dans le terrier (2), à travers ledit injecteur (5), d'une manière alternée.

5. Système de commande selon l'une quelconque des revendications 2 à 4, dans lequel ledit système d'alimentation en gaz (4) comprend au moins un réservoir contenant un mélange gazeux (8) pourvu d'un orifice de sortie (8a) fournissant ledit mélange gazeux, au moins une première conduite (9) connectant ledit orifice de sortie (8a) à un premier orifice d'entrée (5a) dudit injecteur (5) de façon à fournir le mélange gazeux, et des moyens (10) pour réguler la quantité de gaz, qui sont disposés le long de ladite au moins une première conduite (9) de façon à réguler la quantité de mélange gazeux fournie audit injecteur (5) ; lesdits moyens de commande électroniques (6) comprenant une unité de commande électronique (31), qui est appropriée pour recevoir ledit signal (G1) indiquant la concentration du composant qui a été mesurée, et qui est configurée pour commander lesdits moyens de régulation de débit (10) de façon à réguler la quantité du mélange gazeux injectée en fonction de ladite concentration mesurée, afin de s'assurer que la concentration du gaz présent dans le terrier (2) se trouve dans une plage de concentration prédéterminée.

6. Système de commande selon la revendication 5, dans lequel ledit injecteur (5) s'étend le long d'un axe longitudinal (A) et est pourvu d'une conduite d'injection de gaz (21), qui s'étend parallèlement à l'axe longitudinal (A) et qui a une partie terminale configurée de façon à émettre un jet de mélange gazeux dans une direction qui est parallèle audit axe longitudinal (A).

7. Système de commande selon la revendication 5 ou 6, dans lequel ledit injecteur (5) s'étend le long d'un axe longitudinal et est pourvu d'une conduite d'injection de mousse (22), qui s'étend parallèlement à l'axe longitudinal (A) et qui est pourvu d'au moins une ouverture radiale (24) ou d'une ouverture axiale, qui est appropriée pour diriger la mousse dans une direction qui est transversale, ou respectivement parallèle, audit axe longitudinal (A).

8. Système de commande selon l'une quelconque des revendications 5 à 7, dans lequel ledit injecteur (5) comprend au moins un collier tubulaire gonflable (25), qui est disposé coaxialement à l'axe longitudinal (A), et qui est approprié pour être gonflé de façon à s'étendre, et ainsi heurter la surface latérale intérieure du terrier (2) et sceller hermétiquement le terrier (2) lui-même ; et un canal d'injection d'air (26), qui est structuré de façon à avoir une extrémité appropriée pour recevoir de l'air sous pression, et qui communique avec ledit collier (25) de telle sorte que l'air sous pression reçu puisse être injecté dans le collier tubulaire (25), ce qui provoque son extension.

9. Système de commande selon la revendication 8, et comprenant, en outre, des moyens générateurs d'air sous pression (16), qui sont appropriés pour fournir de l'air sous pression au canal d'injection d'air (26) dudit injecteur (5), et dans lequel ladite unité de commande électronique (31) est configurée pour commander lesdits moyens générateurs d'air (16) de façon à commander l'extension dudit collier tubulaire (25) dans ledit terrier (2).

10. Procédé de commande de l'injection d'un mélange gazeux dans un terrier souterrain (2) occupé par des rongeurs ravageurs (3), ledit procédé comprenant l'étape consistant à :
- envoyer un mélange gazeux prédéterminé dans un terrier (2) via un injecteur (5) inséré dans le terrier (2) ;
le procédé étant **caractérisé en ce qu'**il comprend les étapes consistant à :
- collecter dans le terrier (2), via ledit injecteur, au moins un échantillon du mélange gazeux injecté ;
- déterminer la concentration d'au moins un composant du mélange gazeux injecté dans le terrier (2) à partir de l'échantillon collecté ;
- faire varier la quantité du mélange gazeux injectée dans le terrier (2), via ledit injecteur (5), en fonction de la concentration du composant qui a été déterminée.

11. Procédé selon la revendication 10, dans lequel ledit injecteur (5) est structuré de façon à avoir un premier canal de sortie de gaz (22), qui a une première ouverture communiquant avec ledit terrier (2) de façon à collecter un échantillon du mélange gazeux injecté, et une deuxième ouverture de sortie pour la sortie de l'échantillon de gaz collecté ;
ledit procédé comprenant les étapes consistant à :
provoquer la sortie dudit échantillon de mélange gazeux collecté dans le terrier (2) à travers ledit injecteur (5), de façon à l'envoyer à une conduite d'entrée (30a) d'un dispositif analyseur de gaz (30), qui est connectée à ladite deuxième ouverture dudit injecteur ;
mesurer, au moyen dudit dispositif analyseur de gaz (30), ladite concentration du composant du mélange gazeux, de façon à générer un signal (G1) indiquant la concentration mesurée.

12. Procédé selon l'une quelconque des revendications 10 à 11, et comprenant les étapes consistant à :
souffler au moins un mélange gazeux dans un agent moussant, de façon à produire une mousse ;
envoyer ladite mousse audit injecteur (5), de façon à l'injecter dans le terrier.

13. Procédé selon la revendication 12, et comprenant l'étape d'injection de la mousse et du gaz dans le terrier (2), d'une manière alternée, via ledit injecteur (5).

14. Procédé selon l'une quelconque des revendications 11 à 13, et comprenant les étapes consistant à :
prévoir un système d'alimentation en gaz (4), qui comprend au moins un réservoir contenant un mélange gazeux (8), pourvu d'un orifice de sortie (8a) fournissant ledit mélange gazeux, au moins une première conduite (9) connectant ledit orifice de sortie (8a) à un premier orifice d'entrée (5a) dudit injection (5) de façon à fournir le mélange gazeux, et
des moyens (10) pour réguler la quantité de gaz, qui sont disposés le long de ladite au moins une première conduite (9), de façon à réguler la quantité de mélange gazeux fournie audit injecteur (5) ;
commander lesdits moyens de régulation de débit (10) de façon à réguler la quantité de mélange gazeux injectée en fonction de ladite concentration mesurée, afin de garantir que la concentration du gaz présent dans le terrier (2) soit comprise dans une plage de concentration prédéterminée.

15. Procédé selon l'une quelconque des revendications 10 à 14, et comprenant l'étape consistant à émettre, via ledit injecteur (5), un jet de mélange gazeux dans une direction qui est parallèle audit axe longitudinal (A) dudit injecteur et/ou à diriger la mousse dans une direction qui est transversale, ou respectivement parallèle, audit axe longitudinal (A).
